# FASCICULE DE BREVET EUROPEEN

(11) **EP 1 846 647 B1**
(45) Date de publication et mention de la délivrance du brevet: **31.12.2008**
(21) Numéro de dépôt: 06709483.9
(22) Date de dépôt: 06.02.2006
(51) Int. Cl.: F02D 41/02

(54) **PROCEDE DE CONTROLE DE L'INVERSION DE LA PUISSANCE DANS UN SYSTEME COMPORTANT UN CONVERTISSEUR DE COUPLE ET ENSEMBLE MECANIQUE INTEGRANT LEDIT PROCEDE**
VERFAHREN ZUR STEUERUNG DER LEISTUNGSUMKEHR IN EINEM SYSTEM MIT EINEM DREHMOMENTWANDLER UND MECHANISCHE EINHEIT, DIE DAS VERFAHREN UMFASST
METHOD FOR CONTROL OF THE REVERSAL OF POWER IN A SYSTEM COMPRISING A TORQUE CONVERTER AND MECHANICAL UNIT ENCOMPASSING SAID METHOD

(30) Priorité: 08.02.2005 FR 0501248
(43) Date de publication de la demande: 24.10.2007
(73) Titulaire: PEUGEOT CITROËN AUTOMOBILES SA, 78140 Velizy-Villacoublay (FR)
(72) Inventeur: BLASZCZYK, Christophe, F-95320 St Leu-la-foret (FR); JACQUES, Sébastien, F-78955 Carrieres Sous Poissy (FR); COLLEDANI, Frédéric, F-60180 Nogent-sur-oise (FR)
(86) Numéro de dépôt international: PCT/FR2006/050104
(87) Numéro de publication internationale: WO 2006/085023

(56) Documents cités:
- FR-A- 2 739 064
- US-A- 5 924 959
- US-A- 6 165 102

## Description

L'invention concerne un procédé de contrôle améliorant l'agrément hors changement de rapport, lors de la traversée des jeux sur un ensemble mécanique intégrant un convertisseur de couple.

Elle s'adresse plus particulièrement aux systèmes de contrôle assurant la gestion de la fourniture du couple en sortie de la chaîne de traction d'un groupe moto propulseur (GMP) d'un véhicule automobile qui utilise un convertisseur de couple, notamment une transmission à boîte de vitesses automatique.

Elle concerne également un ensemble mécanique d'une chaîne de traction d'un véhicule automobile comportant un moteur, un convertisseur de couple à turbine interposé entre le moteur et une boîte de vitesses couplée aux roues du véhicule,

### ARRIERE-PLAN DE L'INVENTION

Les systèmes de contrôle connus agissent directement sur le couple moteur de consigne pour obtenir l'accélération véhicule souhaitée qui correspond généralement à l'enfoncement de la pédale d'accélérateur par le conducteur d'un véhicule automobile.

Avec de tels systèmes, on constate plusieurs défauts qui impactent directement l'agrément de conduite du conducteur qui ressent des à-coups à chaque accélération ou changement de régime moteur brutal.

C'est par exemple le cas lors d'un inversement de puissance dans le GMP, quand le véhicule passe d'un mode dit "rétro" à un mode dit de "tirage" ou "traction", c'est-à-dire d'un mode dans lequel le moteur est entraîné par l'inertie du véhicule par exemple dans une pente à un mode dans lequel le moteur accélère le véhicule.

Ces à-coups sont essentiellement dus aux jeux entre dents et notamment à la traversée des jeux dans les engrenages du fait de la variation des vitesses relatives des pignons donc de la variation de la position des dents des engrenages de la chaîne de traction du véhicule. Ces variations et le jeu présent entre les dents font apparaître un phénomène dit de « passage » ou "traversée de jeu" pendant lequel les dents des engrenages respectifs qui sont engagées ne sont d'abord plus en contact puis reviennent brutalement en contact. Ce phénomène est également appelé "backlash" ou "clunck" dans la terminologie anglo-saxonne. Ces à-coups sont autant de chocs ressentis par les passagers du véhicule et donc autant de désagréments ressentis par les passagers.

La prise en compte de ce phénomène n'est pas assurée de façon optimale par les procédés de contrôle actuels.

Notamment, en ce qui concerne la calibration des stratégies de contrôles préventifs et curatifs qui agissent sur la commande des couples et qui ne permettent ni de contrôler efficacement les passages des jeux ni de réaliser un bon compromis entre "brio" (nervosité/performance) et confort de conduite.

Le choc ressenti par les passagers du véhicule se traduit par un pic sur la courbe d'évolution du régime de la turbine du GMP en fonction du temps.

Il s'agit d'un phénomène récurrent et on retrouve les mêmes comportements avec différents types de moteur et/ou boîtes de vitesses donc différentes stratégies de contrôles.

### OBJET DE L'INVENTION

L'invention a pour objet un procédé de contrôle et de gestion de la traversée des jeux, hors changement de rapport, sur un ensemble mécanique intégrant un convertisseur de couple.

Ce procédé amène à stabiliser le régime moteur par rapport au régime turbine pendant un temps suffisant pour assurer la traversée des jeux sans à-coup. Pour cela, il consiste à commander le régime moteur en fonction d'un profil de régime cible déterminé et construit en fonction de la mesure du régime turbine. L'invention a notamment pour avantage de mettre en oeuvre un procédé visant à améliorer l'agrément lors des inversions de puissance dans la chaîne de traction. La mise en action du contrôle est ainsi limitée dans le temps et la calibration de l'agrément est simplifiée tout en permettant de fixer le compromis brio / confort de l'ensemble mécanique.

Elle permet en outre de faciliter l'évolution vers des fonctions enrichies ou complexes telles que l'identification des jeux en cours de fonctionnement, la régulation de régime spécifique au moteur, le pilotage de la fonction d'embrayage du convertisseur etc.

### BREVE DESCRIPTION DE L'INVENTION

L'invention a pour premier objet un procédé de contrôle de l'inversion de la puissance dans un système constitué d'un convertisseur de couple, d'une boîte de vitesse automatique d'une chaîne de traction d'un véhicule automobile comportant un moteur, un convertisseur de couple à turbine interposé entre le moteur et une boîte de vitesses couplée aux roues du véhicule. Le procédé est caractérisé en ce qu'il consiste dans une première étape, à mesurer et comparer les régimes moteur et turbine pour activer la prise de contrôle par le procédé en fonction de la demande de couple moteur par le conducteur, dans une deuxième étape, une fois le procédé de contrôle activé, à définir et imposer au moteur un profil de régime construit en fonction de la mesure du régime turbine et d'un compromis déterminé entre brio et confort de conduite, et dans une troisième étape, à adapter le profil de régime imposé au moteur en fonction de la demande de couple moteur initiée par le conducteur du véhicule et du compromis.

Selon une première caractéristique, le contrôle est activé dès que le couple moteur demandé par le conducteur est suffisant pour que le régime moteur devienne inférieur, respectivement supérieur, au régime turbine.

Selon une deuxième caractéristique, le procédé selon l'invention consiste à fixer un profil définissant une pente de régime moteur maximale en entrée du convertisseur, pente qui est déterminée en fonction d'une consigne de régime moteur calculée à partir de la mesure du régime turbine et d'un offset dépendant du compromis.

L'offset est positif quand le régime moteur doit passer au dessus du régime turbine et négatif quand le régime moteur doit passer en dessous du régime turbine et dont l'amplitude dépend des caractéristiques du convertisseur et des jeux dans les engrenages.

Le profil de régime est suivi et imposé au moteur pendant une durée fixée comme étant nécessaire et / ou suffisante pour passer les jeux. Les jeux passés, le procédé consiste à adapter le profil du régime moteur en accord avec le compromis brio / confort et la sollicitation initiale du conducteur.

L'invention a pour deuxième objet un ensemble mécanique d'une chaîne de traction d'un véhicule automobile comportant un moteur, un convertisseur de couple à turbine interposé entre le moteur et une boîte de vitesses couplée aux roues du véhicule. L'ensemble mécanique selon l'invention est caractérisé en ce qu'il comporte des moyens pour mesurer et comparer les régimes moteur et turbine pour activer la prise de contrôle par le procédé selon l'invention en fonction de la demande de couple moteur par le conducteur, des moyens pour définir et imposer au moteur un profil de régime construit en fonction de la mesure du régime turbine et d'un compromis déterminé entre brio et confort de conduite, et des moyens pour adapter le profil de régime imposé au moteur à un régime en accord avec le compromis brio / confort et la sollicitation initiale du conducteur

### BREVE DESCRIPTION DES DESSINS

D'autres caractéristiques et avantages de la présente invention apparaîtront à la lecture de la description détaillée qui va suivre, en regard des dessins annexés, donnés à titre d'exemple non limitatif et sur lesquels :
- la figure 1 représente une vue schématique d'un ensemble mécanique d'une chaîne de traction d'un véhicule automobile mettant en oeuvre un procédé de contrôle selon l'invention
- la figure 2 représente schématiquement les trois étapes principales du procédé de contrôle selon l'invention ;
- les figures 3a et 3b illustrent un exemple de simulation pour l'étape d'identification du procédé selon l'invention ;
- les figures 4a à 4c illustrent l'activité du procédé de contrôle selon l'invention à la suite de l'identification illustrée aux figures 3a et 3b ; et
- la figure 5 illustre un exemple de résultat issu d'une simulation réalisée à partir du procédé de contrôle selon l'invention, simulation qui est basée sur le profil illustré à la figure 4b.

### DESCRIPTION DETAILLEE DE L'INVENTION

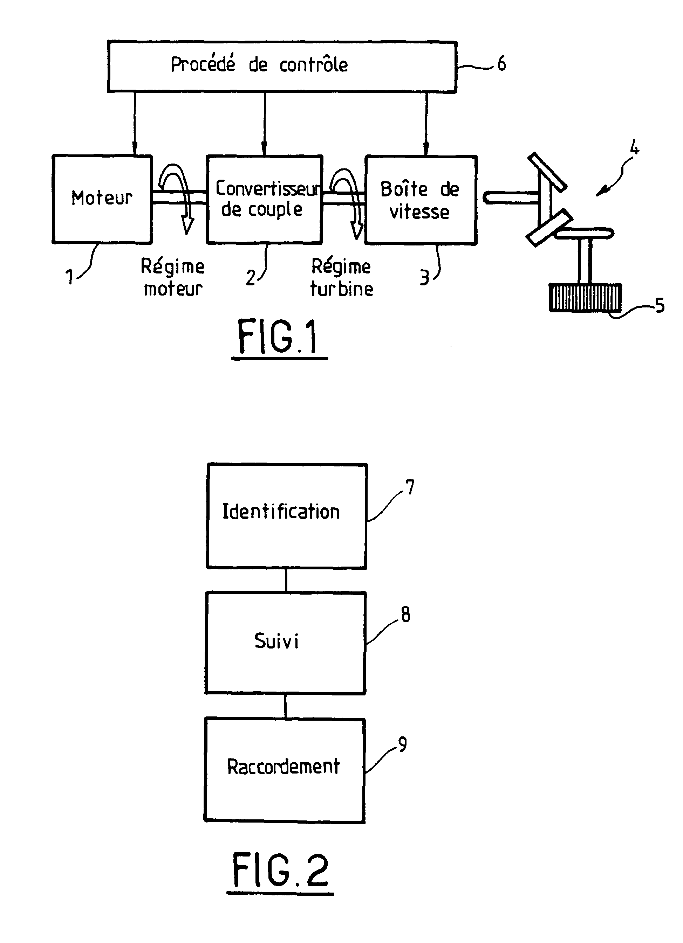

La figure 1 illustre schématiquement un exemple d'un ensemble mécanique d'une chaîne de traction appelé également groupe moto propulsion (GMP) comportant un moteur 1 qui est assimilé à un générateur de couple, un convertisseur de couple 2 et d'une boîte de vitesses 3. Le GMP transmet par l'intermédiaire d'un différentiel 4 et des roue motrices 5 (une seule roue est représentée) une force motrice au véhicule permettant d'accélérer ce dernier.

Un moyen de contrôle, représenté par le bloc fonctionnel 6, agit sur les différents organes du GMP à savoir le moteur 1, le convertisseur 2 et la boîte de vitesses 3.

Dans un tel ensemble, le convertisseur de couple 2 présente la particularité de transmettre un couple à la boîte de vitesses 3 qui est fonction de la différence des régimes qu'il y a en entrée du convertisseur 2 (côté moteur) et en sortie du convertisseur 2 (côté boîte). Le convertisseur de couple 2 permet ainsi d'avoir un régime du moteur 1 qui est différent du régime d'entrée de la boîte 3. Il découple en quelque sorte le moteur 1 de la boîte de vitesses 3.

La figure 2 illustre schématiquement les trois étapes principales du procédé de contrôle selon l'invention.

Dans une première étape 7, le procédé de contrôle est activé dès l'identification du besoin de rendre sécant les régimes moteur et turbine en entrée de boîte.

Le procédé est donc activé par rapport à un événement qui est lié à une demande conducteur à un moment donné et qui réagit en fonction de l'état de l'ensemble mécanique (régime moteur et régime turbine) correspondant au même moment.

Un tel besoin apparaît par exemple quand le conducteur appuie sur la pédale de l'accélérateur. Le procédé va alors suivre l'évolution du régime moteur pour être en mesure d'identifier un passage de "rétro" en "tirage" quand le régime moteur est encore inférieur au régime turbine mais que la demande de couple est suffisante pour que les régimes soient amenés à se croiser. L'exemple inverse (lâcher de pédale) est également géré par le procédé. Dans ce cas, c'est le véhicule qui fournira une force à la chaîne de traction conduisant le régime moteur à passer sous le régime turbine.

Dans une deuxième étape 8, une fois le besoin identifié, le procédé selon l'invention impose de faire suivre au régime moteur un profil qui est déterminé en fonction du régime turbine, selon une stratégie prédéfinie.

Cette stratégie permet de fixer puis de suivre le compromis brio /confort en fonction du type de convertisseur utilisé.

Enfin, dans une troisième étape 9, le procédé adapte le profil du régime moteur en accord avec le compromis brio confort pour raccorder le profil à la sollicitation initiale (demande conducteur).

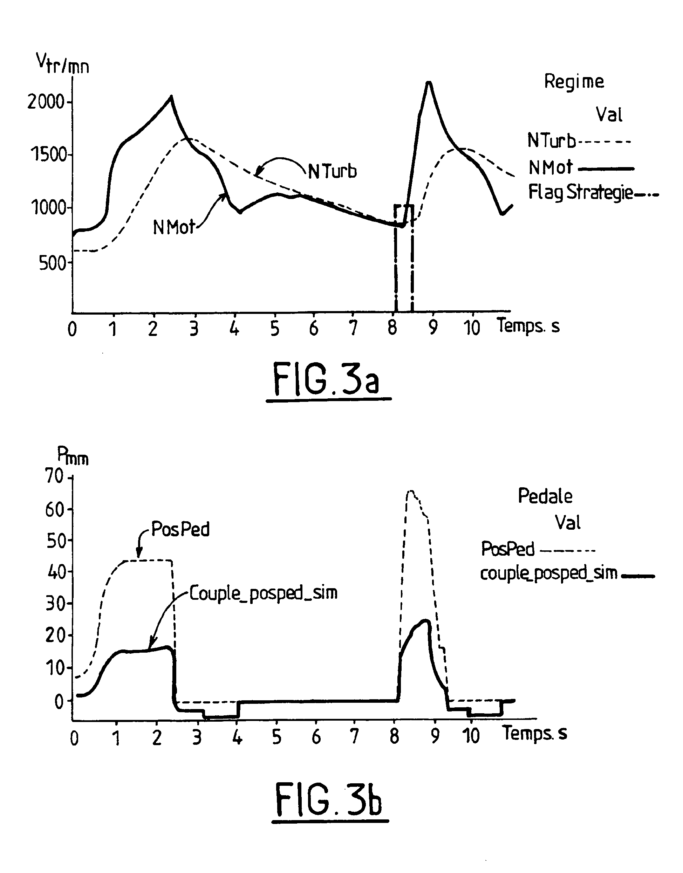

Les figures 3a et 3b illustrent un exemple de simulation pour la détection de la situation de vie mentionnée ci-dessus dans l'étape 7.

La figure 3a illustre l'évolution comparée dans le temps des régimes turbine NTurb et moteur Nmot mesurés sur le véhicule toujours dans l'exemple de passage de rétro en tirage du véhicule. Les régimes sont exprimés en tour/minute et le temps en seconde.

On observe que les deux courbes sont sécantes une première fois à la fin d'une phase équivalente au décollage du véhicule. La phase qui suit jusqu'à ce que les courbes redeviennent à nouveau sécantes correspond à celle dans laquelle le moteur n'entraîne plus le véhicule.

Une fenêtre FlagStrategie en pointillés marque la zone dans laquelle le procédé de contrôle selon l'invention doit avoir été activé.

La figure 3b, à mettre en correspondance avec la courbe 3a, permet de visualiser la position de la pédale d'accélérateur (donc de la demande conducteur : commande d'accélération) et le couple correspondant fourni par le moteur en fonction du temps exprimé en N.m. Le déplacement est exprimé en %.

Dans l'exemple décrit d'un passage de "rétro" en "tirage", on s'aperçoit que le régime moteur devient supérieur au régime turbine pour une demande de couple suffisante.

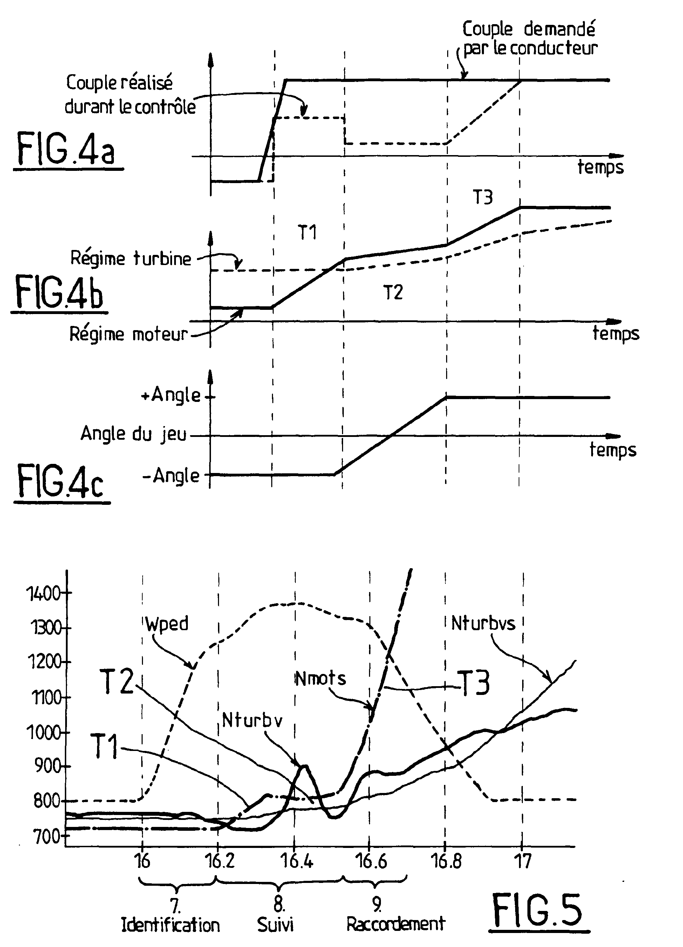

Les figures 4a à 4c illustrent l'activité du procédé de contrôle selon l'invention. Elle est réalisée sur les couples et les régimes moteur et turbine associés par rapport à un profil de régime cible toujours dans l'exemple d'un passage rétro en tirage.

La figure 4a illustre l'évolution parallèle dans le temps du couple moteur fourni durant le contrôle par le procédé selon l'invention et du couple demandé par le conducteur.

On s'aperçoit sur cette figure que le couple réalisé durant le contrôle évolue dans une première étape T1 comme le couple moteur demandé par le conducteur formant sensiblement une marche d'escalier, puis à la fin de l'étape T1 baisse brutalement pour atteindre une valeur constante dans une deuxième étape T2 pour ensuite, dans une troisième étape T3, ré augmenter jusqu'à rejoindre le couple demandé par le conducteur à la fin de l'étape T3.

La figure 4b, à lire en correspondance avec la figure 4a, illustre l'évolution respective dans le temps des régimes turbine et moteur durant le contrôle par le procédé selon l'invention. En partant du régime moteur, au nomment de la demande conducteur, le procédé fixe à l'étape T1 une pente de régime maximale en entrée du convertisseur 2. Cette pente est contrôlée sur un temps déterminé, temps estimé comme étant nécessaire et suffisant pour initier la traversée des jeux. Elle permet de se placer sur une consigne de régime calculée à partir de la mesure du régime turbine et d'un décalage (ou offset) dépendant de la transition à effectuer. Cet offset est positif si le régime moteur doit passer au dessus du régime turbine. Il doit être négatif si le régime moteur doit passer en dessous du régime turbine. La valeur précise de l'offset est fonction des caractéristiques du convertisseur.

Dans la seconde étape T2, le procédé effectue le suivi de la consigne de régime ainsi définie pour effectuer le passage des jeux. Il s'agit d'un suivi de consigne sur un temps fixé comme étant nécessaire et/ou suffisant pour terminer la traversée des jeux en fonction du compromis brio / confort désiré. Sur la figure, les courbes correspondant respectivement à l'évolution du régime turbine et du régime moteur durant le contrôle sont parallèles.

Dans la troisième étape T3, le procédé assure le raccordement avec la sollicitation initiale, c'est-à-dire à la demande conducteur correspondant dans l'exemple décrit à l'enfoncement de la pédale d'accélérateur.

La figure 4c, à lire en correspondance avec les deux figures précédentes, illustre l'évolution dans le temps de l'angle du jeu (traversée des jeux) d'un angle "- Angle" à un angle "+ Angle". La traversée des jeux débute un peu avant la fin de l'étape T1 et coïncide avec l'intersection des courbes régime turbine et régime moteur de la figure 4b. La fin de la traversée des jeux coïncide avec la fin de l'étape T2.

On a représenté enfin, par des accolades, sur l'échelle du temps et en correspondance avec les trois courbes précédentes, les trois étapes 7, 8 et 9 du procédé selon l'invention.

La figure 5 illustre un exemple de résultat issu d'une simulation réalisée à partir du procédé de contrôle selon l'invention, simulation qui est basée sur le profil décrit ci-dessus et illustré à la figure 4b et qui permet de vérifier l'atténuation significative du phénomène d'à-coup (backlash).

Sur cette figure, on peut observer l'évolution comparée dans le temps exprimé en seconde, respectivement du régime turbine sans contrôle Nturbv et du régime turbine simulé avec contrôle Nturbvs ainsi que le régime moteur simulé Nmots.

La courbe Wped correspond à la position de la pédale d'accélérateur durant une sollicitation du conducteur.

On a représenté également sur cette figure, les trois étapes du procédé selon l'invention à savoir l'étape 7 d'identification au départ de la sollicitation du conducteur, l'étape 8 de suivi durant laquelle on observe que le régime moteur croit sensiblement dans l'étape T1 puis se stabilise après un léger ralentissement dans l'étape T2, et enfin, l'étape 9 , T3, de raccordement où le régime moteur croit rapidement pour atteindre le régime correspondant à la sollicitation demandée par le conducteur. Comparativement à la courbe Nturbv sur laquelle on observe une oscillation révélatrice du phénomène de "backlash", la courbe Nturbvs ne comporte pratiquement plus d'oscillation ; l'effet du procédé de contrôle selon l'invention agissant comme un lissage de l'évolution du régime turbine.

Le profil de contrôle selon l'invention n'est pas limité à celui précisément décrit ci-dessus. Il peut être adapté en fonction des paramètres suivant :
- la valeur des jeux présents dans l'ensemble de la chaîne de traction,
- la position effective des jeux au moment de la sollicitation du conducteur,
- le régime moteur,
- l'écart entre régime moteur et régime turbine,
- les caractéristiques du convertisseur
- le type de conduite identifié (sportive)
- et d'autres paramètres extérieurs au véhicule tel que par exemple, la pente de la chaussée, l'état de la route, etc.

De préférence, toujours dans l'exemple d'un passage rétro en tirage sur un véhicule, un profil de régime cible acceptable devra correspondre à un régime moteur stabilisé au dessus du régime turbine avant accélération et cela pendant un temps suffisant pour la traversée des jeux.

## Revendications

1. Procédé de contrôle de l'inversion de la puissance dans un système constitué, d'une boîte de vitesse automatique (3) couplée aux roues d'un véhicule automobile d'un moteur (1), et d'un convertisseur de couple (2) à turbine interposé entre le moteur (1) et la boîte de vitesses (3), **caractérisé en ce qu'**il consiste :
- dans une première étape (7), à mesurer et comparer les régimes moteur et turbine pour activer la prise de contrôle par le procédé en fonction de la demande de couple moteur par le conducteur dès l'identification du besoin de rendre sécant les régimes moteur et turbine en entrée de boîte ;
- dans une deuxième étape (8), une fois le procédé de contrôle activé, à définir et imposer au moteur (1) un profil de régime construit en fonction de la mesure du régime turbine et d'un compromis déterminé entre brio et confort de conduite ; et
- dans une troisième étape (9), à adapter le profil de régime imposé au moteur (1) en fonction de la demande de couple moteur initiée par le conducteur du véhicule et du compromis.

2. Procédé selon la revendication 1, **caractérisé en ce que** le contrôle est activé dès que le couple moteur demandé par le conducteur est suffisant pour que le régime moteur devienne inférieur, respectivement supérieur, au régime turbine.

3. Procédé selon la revendication 1, **caractérisé en ce qu'**il consiste à fixer (8) un profil définissant une pente de régime moteur maximale en entrée du convertisseur (2), pente qui est déterminée en fonction d'une consigne de régime moteur calculée à partir de la mesure du régime turbine et d'un offset dépendant du compromis.

4. Procédé selon la revendication 3, **caractérisé en ce que** l'offset est positif quand le régime moteur doit passer au dessus du régime turbine et négatif quand le régime moteur doit passer en dessous du régime turbine et dont l'amplitude dépend des caractéristiques du convertisseur et des jeux dans les engrenages.

5. Procédé selon la revendication 4, **caractérisé en ce que** le profil de régime est suivi et imposé au moteur pendant une durée fixée comme étant nécessaire et / ou suffisante pour passer les jeux.

6. Procédé selon la revendication 5, **caractérisé en ce qu'**une fois les jeux passés, il consiste à adapter le profil du régime moteur en accord avec le compromis brio / confort et la sollicitation initiale du conducteur.

7. Ensemble mécanique d'une chaîne de traction d'un véhicule automobile comportant un moteur (1), un convertisseur de couple (2) à turbine interposé entre le moteur (1) et une boîte de vitesses (3) couplée aux roues (5) du véhicule, **caractérisé en ce qu'**il comporte :
- des moyens pour mesurer et comparer les régimes moteur et turbine pour activer la prise de contrôle par le procédé selon les revendications précédentes en fonction de la demande de couple moteur par le conducteur ;
- des moyens pour définir et imposer au moteur (1) un profil de régime construit en fonction de la mesure du régime turbine et d'un compromis déterminé entre brio et confort de conduite ; et
- des moyens pour adapter le profil de régime imposé au moteur (1) à un régime en accord avec le compromis brio / confort et la sollicitation initiale du conducteur.

## Claims

1. Method for controlling the inversion of power in a system consisting of an automatic gearbox (3) coupled to the wheels of a motor vehicle, an engine (1), and a torque converter (2) with a turbine interposed between the engine (1) and the gearbox (3), **characterized in that** it consists:
- in a first step (7), in measuring and comparing the engine and turbine speeds in order to activate the taking of control by the method according to the demand for engine torque by the driver on identification of the need to make secant the engine and turbine speeds at the gearbox input;
- in a second step (8), once the control method is activated, in defining and imposing on the engine (1) a speed profile constructed according to the measurement of the turbine speed and a compromise determined between verve and driving comfort; and
- in a third step (9), in adapting the speed profile imposed on the engine (1) according to the demand for engine torque initiated by the driver of the vehicle and the compromise.

2. Method according to Claim 1, **characterized in that** the control is activated as soon as the engine torque demanded by the driver is sufficient for the engine speed to become less than, respectively greater than, the turbine speed.

3. Method according to Claim 1, **characterized in that** it consists in fixing (8) a profile defining a maximum engine speed slope at the input of the converter (2), a slope which is determined according to an engine speed set point calculated from the measurement of the turbine speed and an offset dependent on the compromise.

4. The method as claimed in Claim 3, **characterized in that** the offset is positive when the engine speed must go above the turbine speed and negative when the engine speed must go below the turbine speed and whose amplitude depends on the characteristics of the converter and of the clearances in the gears.

5. Method according to Claim 4, **characterized in that** the speed profile is monitored and imposed on the engine for a fixed period as being necessary and/or sufficient in order to pass the clearances.

6. Method according to Claim 5, **characterized in that** once the clearances are passed, it consists in adapting the profile of the engine speed in accordance with the verve/comfort compromise and the initial pressure of the driver.

7. Mechanical assembly of a traction system of a motor vehicle comprising an engine (1), a torque converter (2) with a turbine interposed between the engine (1) and a gearbox (3) coupled to the wheels (5) of the vehicle, **characterized in that** it comprises:
- means for measuring and comparing the engine and turbine speeds in order to activate the taking of control by the method according to the preceding claims according to the demand for engine torque by the driver;
- means for defining and imposing on the engine (1) a speed profile constructed according to the measurement of the turbine speed and a compromise determined between verve and driving comfort; and
- means for adapting the speed profile imposed on the engine (1) to a speed in accordance with the verve/comfort compromise and the initial pressure of the driver.

## Patentansprüche

1. Verfahren zum Steuern der Leistungsumkehrung in einem System, das aus einem automatischen Getriebe (3), das mit den Rädern eines Kraftfahrzeugs gekoppelt ist, einem Motor (1) und einem Drehmomentwandler (2) mit einer Turbine, die zwischen dem Motor (1) und dem Getriebe (3) geschaltet ist, besteht, **dadurch gekennzeichnet, dass** es Folgendes umfasst:
- in einem ersten Schritt (7) Messen und Vergleichen der Motor- und Turbinendrehzahlen, um die Übernahme der Steuerung durch das Verfahren in Abhängigkeit von dem vom Fahrer verlangten Motordrehmoment zu aktivieren, sobald das Bedürfnis erkannt wurde, die getriebeeingangsseitigen Motor- und Turbinendrehzahlen schneidend zu machen;
- in einem zweiten Schritt (8), nachdem das Steuerungsverfahren aktiviert wurde, Definieren und dem Motor (1) Auferlegen eines Drehzahlprofils, das in Abhängigkeit von der Messung der Turbinendrehzahl und einem Kompromiss, der zwischen Sportlichkeit und Fahrkomfort bestimmt wird, aufgebaut ist; und
- in einem dritten Schritt (9) Anpassen des dem Motor (1) auferlegten Drehzahlprofils in Abhängigkeit von dem vom Fahrzeugführer eingeleiteten Motordrehmomentbedarf und dem Kompromiss.

2. Verfahren nach Anspruch 1, **dadurch gekennzeichnet, dass** die Steuerung aktiviert wird, sobald das vom Fahrer verlangte Motordrehmoment ausreicht, damit die Motordrehzahl kleiner bzw. größer wird als die Turbinendrehzahl.

3. Verfahren nach Anspruch 1, **dadurch gekennzeichnet, dass** es darin besteht, ein Profil festzulegen (8), das eine maximale Motordrehzahlneigung am Eingang des Wandlers (2) definiert, wobei die Neigung als Funktion eines Sollwerts der Motordrehzahl bestimmt wird, der aus der Messung der Turbinendrehzahl und einem von dem Kompromiss abhängigen Ausgleich berechnet wird.

4. Verfahren nach Anspruch 3, **dadurch gekennzeichnet, dass** der Ausgleich positiv ist, wenn die Motordrehzahl die Turbinendrehzahl überschreiten soll, und negativ ist, wenn die Motordrehzahl die Turbinendrehzahl unterschreiten soll, und dessen Größe von den Kennzeichen des Wandlers und dem Spiel im Getriebe abhängig ist.

5. Verfahren nach Anspruch 4, **dadurch gekennzeichnet, dass** das Drehzahlprofil befolgt und dem Motor auferlegt wird während einer Dauer, die als zum Überwinden des Spiels notwendig und/oder ausreichend festgelegt ist.

6. Verfahren nach Anspruch 5, **dadurch gekennzeichnet, dass** sobald das Spiel überwunden ist, es darin besteht, das Profil der Motordrehzahl im Einklang mit dem Kompromiss Sportlichkeit/Komfort und der ursprünglichen Anforderung des Fahrers anzupassen.

7. Mechanische Einheit aus einer Antriebskette eines Kraftfahrzeugs, umfassend einen Motor (1), einen Drehmomentwandler (2) mit einer Turbine, die zwischen dem Motor (1) und einem Getriebe (3) geschaltet ist, das mit den Rädern (5) des Fahrzeugs gekoppelt ist, **dadurch gekennzeichnet, dass** sie folgendes umfasst:
- Mittel zum Messen und Vergleichen der Motor- und Turbinendrehzahlen, um die Übernahme der Steuerung durch das Verfahren nach den vorhergehenden Ansprüchen in Abhängigkeit von dem vom Fahrer verlangten Motordrehmoment zu aktivieren;
- Mittel zum Definieren und dem Motor (1) Auferlegen eines Drehzahlprofils, das in Abhängigkeit von der Messung der Turbinendrehzahl und einem Kompromiss, der zwischen Sportlichkeit und Fahrkomfort bestimmt wird, aufgebaut ist; und
- Mittel zum Anpassen des dem Motor (1) auferlegten Drehzahlprofils an eine Drehzahl im Einklang mit dem Kompromiss Sportlichkeit/Komfort und der ursprünglichen Anforderung des Fahrers.
